# EUROPÄISCHE PATENTSCHRIFT

(11) **EP 0 621 066 B1**
(45) Veröffentlichungstag und Bekanntmachung des Hinweises auf die Patenterteilung: **31.05.2000**
(21) Anmeldenummer: 94102375.6
(22) Anmeldetag: 17.02.1994
(51) Int. Cl.: B01D 29/62, B01D 29/35

(54) **Rückspülbares Filtergerät**
Back washing filter assembly
Installation de filtre de rinçage à contre-courant

(30) Priorität: 19.03.1993 DE 4308943
(43) Veröffentlichungstag der Anmeldung: 26.10.1994
(73) Patentinhaber: BWT Wassertechnik GmbH, 69198 Schriesheim (DE)
(72) Erfinder: Diehlmann, Rolf, D-68623 Lampertheim (DE)
(74) Vertreter: Wolf, Eckhard, Dr.-Ing.

(56) Entgegenhaltungen:
- EP-A- 0 120 988
- EP-A- 0 121 090
- US-A- 4 549 961

## Beschreibung

Die Erfindung betrifft ein rückspülbares Filtergerät mit einer über einen Rohwassereinlaß mit Rohwasser unter Netzdruck beaufschlagbaren Rohwasserkammer, einer von dieser durch ein im wesentlichen hohlzylindrisches Filterelement getrennten, zu einem Reinwasserauslaß führenden Reinwasserkammer, einer mit einem verschließbaren Rückspülkanal verbindbaren Rückspülkammer und einem innerhalb des Filterelements angeordneten, über die rohwasserseitige Oberfläche des Filterelements axial verschiebbaren, austrittsseitig mit der Rückspülkammer verbindbaren Rückspülelement, das eine als radial gegen die Innenfläche des Filterelements weisende schlitzförmige Umfangsöffnung ausgebildete Eintrittsöffnung aufweist, die an mindestens einem mit den Begrenzungskanten der Eintrittsöffnung gegen das Filterelement anliegenden und beim Verschieben des Rückspülelements auf diesem axial gleitenden Abstreifelement angeordnet ist, das weiter an seinem in die Rückspülkammer eintauchenden Ende einen gegen einen Dichtsitz im Bereich des Rückspülkanals andrückbaren Schließkörper trägt und das an seinem dem Schließkörper gegenüberliegenden Ende von der Rohwasserkammer aus mit einem Kolbenansatz druckdicht in eine mit dem Netzdruck beaufschlagbare Steuerkammer eingreift.

Es ist ein rückspülbares Filtergerät dieser Art bekannt (EP 0 120 988 B2), bei welchem das Rückspülelement einen axial überstehenden, nach oben offenen Hohlkolben aufweist, der in einen nach unten offenen Steuerzylinder einer hydraulischen Steuereinrichtung eingreift. Die hydraulische Steuereinrichtung enthält ein als 3/2-Wegeventil ausgebildetes Steuerventil, das von außen über einen Ventilstößel betätigbar ist. In der Betriebsstellung des Steuerventils steht der Steuerzylinder mit der Rohwasserkammer in Verbindung, so daß das Rückspülelement unter der Einwirkung des Netzdrucks mit seinem Schließkörper im Dichtsitz, der sich im Rückspülauslaß befindet, gehalten wird. Beim Verschieben des Ventilstößels von der Betriebsstellung aus in seine nach unten verschobene Rückspülstellung wird der Durchtritt von der Rohwasserkammer zum Steuerzylinder versperrt und eine Verbindung zwischen dem Steuerzylinder und einem zentral nach unten führenden Rohr hergestellt. Das zentrale Rohr ist dicht durch eine zentrale Axialbohrung des Rückspülelements hindurchgeführt und ist an seinem Ende zum Rückspülkanal hin offen. In der Rückspülstellung wird der Steuerzylinder daher gegen Atmosphärendruck entlastet. Das Rückspülelement wird somit aufgrund des sich zwischen der Rückspülkammer und dem Steuerzylinder einstellenden Differenzdrucks nach oben verschoben, wobei das Wasser aus dem Steuerzylinder über das zentrale Rohr verdrängt wird. Dabei hebt sich der Schließkörper von seinem Dichtsitz ab und gibt die Auslaßöffnung zum Rückspülkanal frei. Das Rückspülelement bewegt sich nur so lange bis zu einem oberen Anschlag aufwärts, als das mit dem Ventilstößel verbundene Betätigungselement niedergehalten wird. Wird das Betätigungselement losgelassen, so gelangt das Steuerventil unter der Einwirkung einer Rückholfeder wieder in seine Betriebsstellung, in der der Steuerzylinder mit dem Betriebsdruck aus der Rohwasserkammer beaufschlagt und das Rückspülelement in seine Betriebsstellung unter gleichzeitigem Verschließen der Rückspülöffnung zurückverschoben wird. Mit dem bekannten Filtergerät ist es zwar möglich, mit der dort vorhandenen hydraulischen Steuerungseinrichtung mit relativ einfachen Mitteln einen halbautomatischen oder automatischen Rückspülvorgang auszulösen. Beim Rückspülvorgang sind jedoch erhebliche Reibungswiderstände zu überwinden. Es hat sich nun gezeigt, daß vor allem bei stark verschmutzten Filterelementen mit hohen Reibungsbeiwerten die Kraftaufbringung in den beiden Verschieberichtungen nicht mit ausreichenden Überreserven ausgestattet ist, um einen zuverlässigen Rückspülbetrieb gewährleisten zu können. Auch die Federrückstellung des Steuerstößels hat sich für den Langzeitbetrieb nicht als ausreichend zuverlässig erwiesen.

Ausgehend hiervon liegt der Erfindung die Aufgabe zugrunde, das bekannte rückspülbare Filtergerät dahingehend zu verbessern, daß sowohl beim Rückspülelement als auch beim Steuerventil die Kraftaufbringung in beiden Richtungen mit ausreichend Überreserve ausgestattet ist, um auch bei hohen Reibungsbeiwerten infolge überdurchschnittlicher Verschmutzung des Filtergeräts einen zuverlässigen Rückspülbetrieb zu gewährleisten.

Zur Lösung dieser Aufgabe wird gemäß der Erfingung die im Patentanspruch 1 angegebene Merkmalskombination vorgeschlagen. Weitere vorteilhafte Ausgestaltungen und Weiterbildungen der Erfindung ergeben sich aus den abhängigen Ansprüchen.

Die erfindungsgemäße Lösung geht von dem Gedanken aus, daß durch den Einsatz eines Differentialkolbens und durch die Verwendung einer vereinfachten, lediglich ein Absperrventil aufweisenden Steuereinrichtung die Betriebszuverlässigkeit beim Rückspülvorgang auch bei stark verschmutzen Filterelementen wesentlich verbessert werden kann. Um dies zu erreichen wird gemäß der Erfindung vorgeschlagen, daß der Kolbenansatz als Differentialkolben ausgebildet ist, dessen wirksame Kolbenfläche zur Rohwasserkammer hin kleiner als zur Steuerkammer hin ist, und daß die Steuerkammer ständig über ein Drosselelement mit der Rohwasserkammer oder der Reinwasserkammer kommuniziert und über ein Absperrventil mit einem unter Atmosphärendruck stehenden, mit dem Rückspülkanal verbundenen Entlastungskanal verbindbar ist.

Um auch bei fehlendem Netzdruck ein sicheres Zurückführen des Rückspülelements in die Betriebsstellung zu gewährleisten, ist das Rückspülelement zweckmäßig über eine in der Steuerkammer angeordnete Druckfeder in Schließrichtung des Schließkörpers federbelastet.

Eine bevorzugte Ausgestaltung der Erfindung sieht vor, daß das Drosselelement als vorzugsweise in einer mit Rohwasser beaufschlagten Zweigleitung angeordnete Festdüse ausgebildet. Um auch nach längerem Betrieb eine Verschmutzung der Steuerkammer und des Drosselelements auszuschließen, wird vorteilhafterweise in der Zweigleitung vor dem Drosselelement ein Filtersieb angeordnet.

Eine weitere vorteilhafte Ausgestaltung der Erfindung sieht vor, daß der Kolbenansatz als zur Steuerkammer hin vorzugsweise durch einen Deckel druckdicht verschlossener Hohlkolben ausgebildet ist, dessen Hohlraum mit der Entlastungsseite des Absperrventils kommuniziert und über eine das Rückspülelement und den Schließkörper zentral durchsetzende Ablaufleitung hindurch zum Rückspülkanal hin offen ist. Der Hohlkolbendeckel ist dabei zweckmäßig im Preßsitz auf den Kolbenansatz aufgesetzt. Er weist vorteilhafterweise eine steuerkammerseitige Vertiefung zur Aufnahme des einen Endes der als Schraubendruckfeder ausgebildeten Rückstellfeder auf.

Eine bevorzugte Ausgestaltung der Erfindung sieht vor, daß der Kolbenansatz zwei in axialem Abstand voneinander angeordnete, vorzugsweise als Nutenringe ausgebildete, die kleinere und die größere Kolbenfläche des Differentialkolbens definierende Dichtungsringe mit unterschiedlichem Durchmesser aufweist. Der Verbindungsbereich zwischen den beiden Dichtungsringen kann als druckdichte Entlastungskanaldurchführung von der Steuerkammer zum Rückspülkanal genutzt werden. Dementsprechend wird gemäß einer vorteilhaften Ausgestaltung der Erfindung ein vom Absperrventil zum Hohlraum des Hohlkolbens führende Verbindungskanal vorgeschlagen, der zwischen den beiden Dichtungsringen durch Wandbohrungen des Hohlkolbens hindurchgeführt ist. Die Wandbohrungen können innenseitig in einen zwischen Hohlkolbendeckel und Hohlkolbenwand gebildeten Ringkanal münden, während sie außenseitig zu einem Ringkanal erweitert und über vorzugsweise stirnseitig offene, gehäusefeste, über den Umfang verteilt angeordnete Radialkanäle mit dem Absperrventil verbunden sein können.

Das Absperrventil ist vorteilhafterweise als Sitzventil und dabei insbesondere als Membranventil ausgebildet, dessen Ventilkörper oder -membran über einen in Schließrichtung federbelasteten, in Öffnungsrichtung mittels eines Magneten entgegen der Federbelastung verschiebbaren Stößel aus magnetisierbarem Material betätigbar ist. Zur Betätigung des Absperrventils kann dieses einen mit einem Dauermagneten bestückten und mit seinem Dauermagneten in Richtung Stößel entgegen der Kraft einer Rückstellfeder verschiebbaren Durcktaster aufweisen. Eine vollautomatische Betätigung ist ohne große Umbaumaßnahmen dadurch möglich, daß das Absperrventil einen in der Nähe des Stößels angeordneten, über eine Steuereinrichtung mit Strom beaufschlagbaren Elektromagneten aufweist.

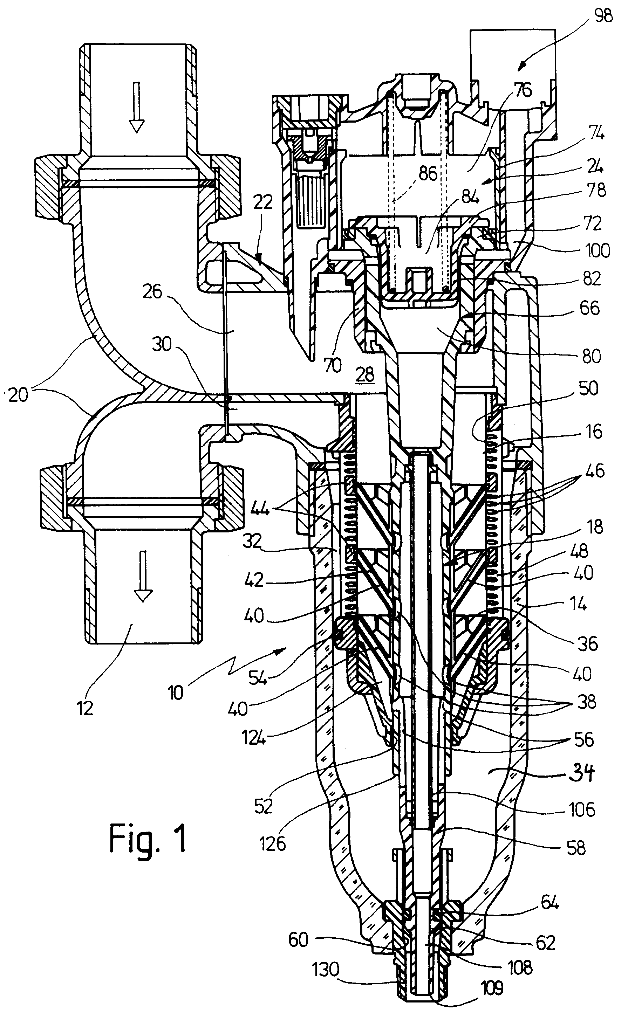

Im folgenden wird die Erfindung anhand eines in der Zeichnung in schematischer Weise dargestellten Ausführungsbeispiels näher erläutert. Es zeigen
- Fig. 1: einen senkrechten Schnitt durch ein rückspülbares Filtergerät;

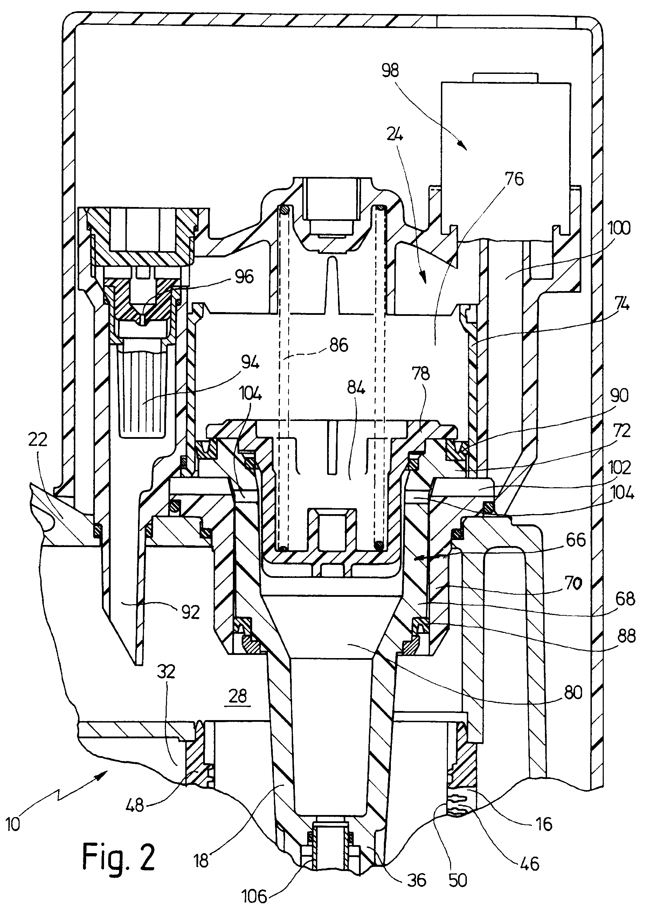

- Fig. 2: einen vergrößerten Ausschnitt aus Fig. 1 im Bereich der Steuereinrichtung;
- Fig. 3: einen Schnitt durch ein manuell betätigbares Absperrventil zur Auslösung eines Rückspülvorgangs;
- Fig. 4: einen Schnitt durch ein elektromagnetisch betätigbares Absperrventil.

Das in der Zeichnung dargestellte rückspülbare Filtergerät 10 ist für den Anschluß an eine Wasserleitungsanlage bestimmt und hat die Aufgabe, die Wasserleitungen 12 und die daran angeschlossenen Armaturen und Geräte vor Verunreinigungen zu schützen. Es besteht im wesentlichen aus einer Filtertasse 14, einem in die Filtertasse 14 eingesetzten Filterelement 16, einem Rückspülelement 18, einem mit Rohranschlüssen 20 versehenen Kopfteil 22, an dem die Filtertasse 14 zusammen mit dem Filterelement 16 befestigbar ist, und mit einer im Kopfteil 22 angeordneten Steuereinrichtung 24 zur Auslösung eines Rückspülvorgangs.

Durch das Filterelement 16 wird der Innenraum der Filtertasse 14 in zwei Kammern unterteilt, eine mit dem Rohwassereinlaß 26 verbundene Rohwasserkammer 28 im Inneren des Filterelements 16 und eine mit dem Reinwasserauslaß 30 verbundene Reinwasserkammer 32 auf der Außenseite des Filterelements 16.

Während des Filtrierbetriebs tritt das ankommende Wasser durch den Rohwassereinlaß 26 in die Rohwasserkammer 28 ein, durchströmt das Filterelement 16 von innen nach außen und fließt gereinigt durch den Reinwasserauslaß 30 ab. Die im Rohwasser befindlichen Schwebeteilchen werden an der inneren Filterfläche zurückgehalten. Gröbere Teilchen sinken nach unten in die Rückspülkammer 34. Mit zunehmender Verschmutzung des Filterelements 16 erhöht sich der Druckabfall am Gerät. Deshalb muß das Filterelement 16 von Zeit zu Zeit durch Rückspülen gereinigt werden. Hierzu dient das im Inneren des Filterelements 16 angeordnete Rückspülelement 18. Das Rückspülelement 18 ist relativ zum Filterelement 16 axial verschiebbar innerhalb der Filtertasse angeordnet. Es weist ein Zentralrohr 36 auf, in welchem bei dem gezeigten Ausführungsbeispiel je vier auf drei Ringen angeordnete Mantelöffnungen 38 angeordnet sind, die mit entsprechenden Rohransätzen 40 der drei auf das Zentralrohr 36 übereinander aufgesteckten Abstreifelemente 42 kommunizieren. An ihrem dem Filterelement zugewandten, nach oben weisenden Ende liegen die Rohransätze 40 mit den Kanten ihrer schlitzförmigen verbreiterten Eintrittsöffnungen 44 unter elastischer Vorspannung gegen die glatte Innenfläche des innenseitig über den mit Durchtrittsöffnungen 46 versehenen Stützkörper 48 gespannten Filterstrumpfs 50 an. Die Abstreifelemente 42 werden auf dem Zentralrohr 36 verdrehsicher gehalten und axial arretiert. Das Rückspülelement 18 greift mit seinem Zentralrohr 36 durch eine zentrische Öffnung 52 des mit einem Dichtring 54 gegen die Innenfläche der Filtertasse 14 anliegenden Filterelements 16 hindurch und weist an seinem unteren Ende ein mit zwei Federzungen 56 eingerastetes Verschlußteil 58 auf, das an seinem unteren Ende einen in einen Dichtsitz 60 einführbaren Schließkörper 62 mit Dichtring 64 aufweist.

In seinem oberen Bereich weist das Rückspülelement 18 einen axial überstehenden Stufenkolben 66 auf, der von der Rohwasserkammer 28 aus mit seinem Teil 68 mit kleinerem Durchmesser durch eine kopfteilfeste Zylinderbüchse 70 hindurchgreift und mit seinem Teil 72 größeren Durchmessers in eine Zylinderlaufbüchse 74 der Steuerkammer 76 eingreift. Der Stufenkolben 66 ist hohl ausgebildet und zur Steuerkammer 76 durch einen eingepreßten Deckel 78 verschlossen. Der Deckel 78 weist eine in den Kolbenhohlraum 80 eingreifende Einwölbung 82 auf, die eine zur Steuerkammer 76 offene Vertiefung 84 zur Aufnahme einer Rückstellfeder 86 bildet. Der Stufenkolben 66 liegt mit seinem Teil 68 über eine Nutringdichtung 88 gegen die Zylinderbüchse 70 und mit seinem Teil 72 über eine Nutringdichtung 90 dichtend gegen die Zylinderlaufbüchse 74 an.

Die Steuerkammer 76 kommuniziert über den Kanal 92, in welchem ein Filtersieb 94 und eine als Düse ausgebildete Strömungsdrossel 96 angeordnet ist, ständig mit der Rohwasserkammer 28. Weiter ist die Steuerkammer 76 über ein als Membranventil 98 ausgebildetes Absperrventil wahlweise mit einem Entlastungsrohr 100 verbindbar, das über stirnseitig offene Radialkanäle 102 in der Zylinderbüchse 74 und über Radialbohrungen 104 in der Wandung des Stufenkolbens 66 im Bereich zwischen den beiden Dichtungen 88, 90 mit dem Kolbenhohlraum 80 und von dort aus über ein Rohrstück 106 und den Zentralkanal 108 des Verschlußteils 58 mit dem unter Atmosphärendruck stehenden Rückspülkanal 109 verbunden ist.

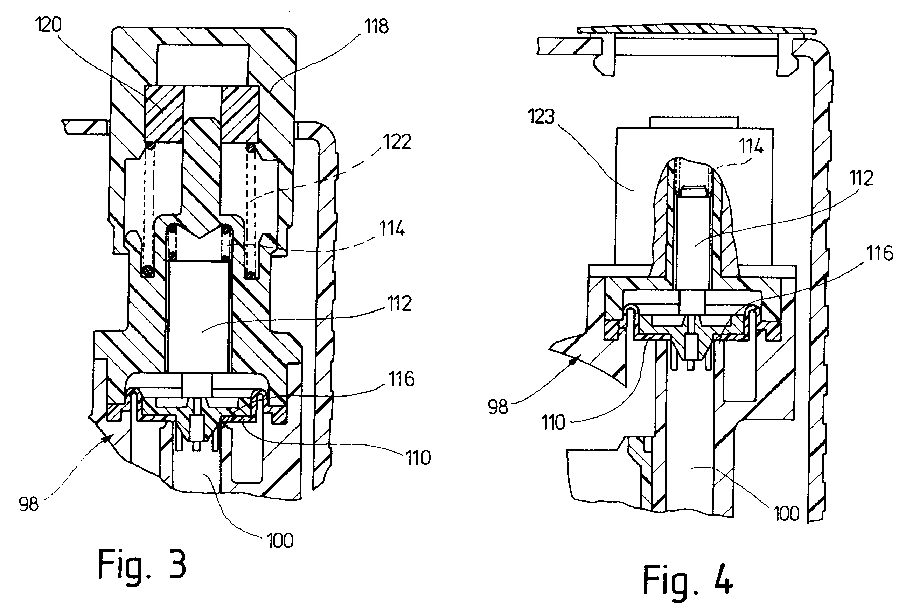

Die Betätigung des Membranventils kann bei annähernd gleichem Aufbau entweder manuell (Fig. 3) oder automatisch (Fig. 4) erfolgen. In beiden Fällen wird die Membran 110 des Membranventils 98 im Schließzustand mit einem Stößel 112 unter der Einwirkung einer Druckfeder 114 gegen den Ventilsitz 116 gedrückt. Der Stößel 112 besteht jeweils aus ferromagnetischem Material. Bei dem in Fig. 3 gezeigten Ausführungsbeispiel ist der Drucktaster 118 mit einem Dauermagneten 120 bestückt. Wird der Drucktaster 118 gegen die Kraft der Feder 122 nach unten verschoben, so wird der Magnetstößel 112 von einer bestimmten Stellung an entgegen der Kraft seiner Feder 114 vom Dauermagneten 120 angezogen und die Membran 110 von ihrem Sitz 116 abgehoben. Bei dem Ausführungsbeispiel nach Fig. 4 wird der Stößel 112 entgegen der Kraft seiner Feder 114 über einen durch eine Zentralsteuerung angesteuerten Elektromagneten 123 vom Ventilsitz 116 abgehoben.

Bei geschlossenem Membranventil 98 baut sich in der Steuerkammer 76 über den Kanal 92 und die Drossel 96 der in der Rohwasserkammer 28 herrschende Netzdruck auf. Der Stufenkolben 66 wird daher sowohl von der Steuerkammer 76 als auch von der Rohwasserkammer 28 her mit dem Netzdruck beaufschlagt, der aufgrund der größeren steuerkammerseitigen Kolbenfläche das Rückspülelement 18 in seiner unteren Betriebsstellung hält, in der der Schließkörper 62 in den Dichtsitz 60 eingreift.

In dieser Stellung des Rückspülelements 18 baut sich in der Rückspülkammer der Netzdruck auf, so daß zwischen Reinwasserkammer 32 und Rückspülkammer 34 keine Druckdifferenz besteht.

Der Rückspülvorgang wird dadurch eingeleitet, daß das Absperrventil 98 geöffnet wird. Dabei wird eine Verbindung zwischen der Steuerkammer 76 und dem Entlastungsrohr 100 hergestellt, und damit die Steuerkammer gegen Atmosphärendruck entlastet. Über die Drossel 96 strömt zwar Wasser aus der Rohwasserkammer 28 in die Steuerkammer 76 nach. Da der Strömungsquerschnitt an der Drossel 96 jedoch sehr viel kleiner ist als im Entlastungsrohr 100, stellt sich der Druckabfall vom Netzdruck zum Atmosphärendruck unmittelbar an der Drossel 96 ein. Es strömt dort nur sehr wenig Wasser über.

Wird somit das Absperrventil 98 von der Schließstellung in die offene Rückspülstellung gebracht, so wird das Rückspülelement 18 mit seinem Stufenkolben 66 aufgrund des sich zwischen der Rohwasserkammer 28 und der Steuerkammer 76 einstellenden Differenzdrucks nach oben verschoben, wobei das Wasser aus der Steuerkammer 76 über das Entlastungsrohr 100 zum Rückspülauslaß 109 hin verdrängt wird. Dabei hebt sich zunächst der Schließkörper 62 von seinem Dichtsitz 60 ab und gibt den Auslaß für die Rückspülkammer 34 frei. Beim weiteren Anheben des Rückspülelements 18 wird das Filterelement 16 an den augenblicklich von der Eintrittsöffnung 44 der Abstreifelemente 42 überstrichenen Stellen von außen nach innen mit Reinwasser rückgespült, wobei das Rückspülwasser durch das Zentralrohr 36 zur Rückspülkammer 34 und von dort zum Abflußstutzen 130 gelangt. Beim Hochfahren des Rückspülelements werden zugleich gröbere Schmutzteile durch die Abstreifelemente 42 mit ihren schräg nach oben weisenden Rohransätzen 40 von der glatten Filteroberfläche abgeschabt und gelangen in den darunter befindlichen Raum 124 des Filterelements. In der oberen Endstellung tritt die Unterkante 126 des Zentralrohrs in den Raum 124 des Filterelements ein und gibt eine Öffnung für die sich dort angesammelten Schmutzteilchen zur Rückspülkammer 34 hin frei, die sodann mit dem nach unten strömenden Rohwasser zur Auslaßöffnung 60 gelangen können. Das Rückspülelement bewegt sich nur so lange bis zu seinem oberen Anschlag aufwärts, als das Membranventil 98 über die Drucktaste 118 oder die Magnetansteuerung offen gehalten wird.

Wird das Absperrventil 98 durch Loslassen des Drucktasters 118 oder durch Abschalten des Erregerstroms des Elektromagneten 123 wieder geschlossen, so baut sich in der Steuerkammer 76 über die Drossel 96 allmählich wieder der Netzdruck auf. Unter der Einwirkung des am Kolben 66 auftretenden Differentialdrucks wird das Rückspülelement 18 wieder langsam in seiner untere Endstellung bewegt. Hierbei wird die innere Filterfläche des Filterelements 16 ein zweites Mal überstrichen und vom Restschmutz gereinigt. Beim Schließen der Auslaßöffnung tritt im Bereich des Schließkörpers 62 eine allmähliche Querschnittsverengung auf, die das Entstehen von Flüssigkeitsstößen während des Schließvorgangs verhindert. Der Schließkörper 62 enthält als Dichtelement einen Nutring 64, der mit seiner nach oben offenen Nut dafür sorgt, daß die Dichtwirkung der Nutenflanken nach beiden Seiten durch den Flüssigkeitsdruck in der Rückspülkammer 34 unterstützt wird.

Zusammenfassend ist folgendes festzustellen: Bei einem Filtergerät für strömendes Wasser ist eine Rückspülvorrichtung vorgesehen, die ein mit mindestens einer schlitzförmigen Eintrittsöffnung 44 versehenes Rückspülelement 18 enthält, das austrittsseitig mit einem Rückspülkanal 109 verbindbar ist. Das Rückspülelement 18 ist innerhalb eines Filterelements 16 axial verschiebbar angeordnet. Die im wesentlichen radial gegen die Innenfläche des Filterelements 16 weisende schlitzförmige Eintrittsöffnung 44 überstreicht beim axialen Verschieben des Rückspülelements 18 die gesamte rohwasserseitige Filteroberfläche, so daß das Filterelement 16 sukzessive über seine ganze Höhe von dem von der Reinwasserkammer 32 aus durch das Filterelement 16 zum Rückspülelement strömenden Wasser gereinigt wird. Das Rückspülelement weist einen Stufenkolben 66 auf, der mit Hilfe einer manuell oder automatisch betätigbaren Steuereinrichtung wahlweise mit verschiedenen Drücken beaufschlagbar ist, die eine selbsttätige axiale Verschiebung des Rückspülelements 18 zwischen den beiden Endlagen bewirken.

## Patentansprüche

1. Rückspülbares Filtergerät mit einer über einen Rohwassereinlaß (26) mit Rohwasser unter Netzdruck beaufschlagbaren Rohwasserkammer (28), einer von dieser durch ein im wesentlichen hohlzylindrisches Filterelement (16) getrennten, zu einem Reinwasserauslaß (30) führenden Reinwasserkammer (32), einer mit einem verschließbaren Rückspülkanal (109) verbindbaren Rückspülkammer (34) und einem innerhalb des Filterelements (16) angeordneten, über die rohwasserseitige Oberfläche des Filterelements (16) axial verschiebbaren, austrittsseitig mit der Rückspülkammer (34) verbindbaren Rückspülelement (18), das eine als radial gegen die Innenfläche des Filterelements weisende schlitzförmige Umfangsöffnung ausgebildete Eintrittsöffnung (44) aufweist, die an mindestens einem mit den Begrenzungskanten der Eintrittsöffnung (44) gegen das Filterelement (16) anliegenden und beim Verschieben des Rückspülelements (18) auf diesem axial gleitenden Abstreifelement (42) angeordnet ist, das weiter an seinem in die Rückspülkammer (34) eintauchenden Ende einen gegen einen Dichtsitz (60) im Bereich des Rückspülkanals andrückbaren Schließkörper (62) trägt und das an seinem dem Schließkörper (62) gegenüberliegenden Ende von der Rohwasserkammer (34) aus mit einem Kolbenansatz (66) druckdicht in eine mit dem Netzdruck beaufschlagbare Steuerkammer (76) eingreift, **dadurch gekennzeichnet**, daß der Kolbenansatz (66) als Differentialkolben ausgebildet ist, dessen wirksame Kolbenfläche zur Rohwasserkammer (28) hin kleiner als zur Steuerkammer (76) hin ist, und daß die Steuerkammer (76) ständig über ein Drosselelement (96) mit der Rohwasserkammer (28) oder der Reinwasserkammer (32) kommuniziert und über ein Absperrventil (98) mit einem unter Atmosphärendruck stehenden, mit dem Rückspülkanal (109) verbundenen Entlastungskanal (100) verbindbar ist.

2. Filtergerät nach Anspruch 1, **dadurch gekennzeichnet**, daß das Rückspülelement (18) vorzugsweise über eine in der Steuerkammer (76) angeordnete Rückstellfeder (86) in Schließrichtung des Schließkörpers (62) federbelastet ist.

3. Filterelement nach Anspruch 1 oder 2, **dadurch gekennzeichnet**, daß das Drosselelement (96) als vorzugsweise in einer mit Rohwasser beaufschlagten Zweigleitung angeordnete Düse ausgebildet ist.

4. Filtergerät nach Anspruch 3, **dadurch gekennzeichnet**, daß in der Zweigleitung (92) in Strömungsrichtung vor dem Drosselelement (96) ein Filtersieb (94) angeordnet ist.

5. Filtergerät nach einem der Ansprüche 1 bis 4, **dadurch gekennzeichnet**, daß das Absperrventil (98) als Sitzventil, insbesondere als Membranventil ausgebildet ist, dessen Ventilkörper oder Membran (110) über einen in Schließrichtung federbelasteten und in Öffnungsrichtung mittels eines Magneten entgegen der Federbelastung verschiebbaren Stößel (112) aus magnetisierbarem Material betätigbar ist.

6. Filtergerät nach Anspruch 5, **dadurch gekennzeichnet**, daß das Absperrventil (98) einen mit einem Dauermagneten (120) bestückten, mit seinem Dauermagneten in Richtung Stößel entgegen der Kraft einer Rückstellfeder (122) verschiebbaren Drucktaster (118) aufweist.

7. Filtergerät nach Anspruch 6, **dadurch gekennzeichnet**, daß das Absperrventil (98) einen in der Nähe des Stößels (112) angeordneten, über eine zentrale Steuereinrichtung mit Strom beaufschlagbaren Elektromagneten (123) aufweist.

8. Filtergerät nach einem der Ansprüche 1 bis 7, **dadurch gekennzeichnet**, daß der Kolbenansatz (66) des Rückspülelements (18) als zur Steuerkammer (76) hin vorzugsweise durch einen Deckel (78) druckdicht verschlossener Hohlkolben ausgebildet ist, dessen Hohlraum mit dem Entlastungsrohr (100) kommuniziert und über eine das Rückspülelement (18) und den Schließkörper (62) zentral durchsetzende Ablaufleitung (108) hindurch zum Rückspülkanal hin offen ist.

9. Filtergerät nach Anspruch 8, **dadurch gekennzeichnet**, daß der Hohlkolbendeckel (78) im Preßsitz auf den Kolbenansatz (66) aufgesetzt ist.

10. Filtergerät nach Anspruch 8 oder 9, **dadurch gekennzeichnet**, daß der Hohlkolbendeckel (78) eine steuerkammerseitige Vertiefung (84) zur Aufnahme des einen Endes der als Schraubendruckfeder ausgebildeten Rückstellfeder (86) für das Rückspülelement (18) aufweist.

11. Filtergerät nach einem der Ansprüche 1 bis 10, **dadurch gekennzeichnet**, daß der Kolbenansatz (66) zwei in axialem Abstand voneinander angeordnete, vorzugsweise als Nutringe ausgebildete, die kleinere und die größere wirksame Kolbenfläche definierende Dichtungsringe (88,90) mit unterschiedlichen Durchmessern aufweist.

12. Filtergerät nach Anspruch 11, **dadurch gekennzeichnet**, daß der vom Absperrventil (98) zum Kolbenhohlraum (80) führende Entlastungskanal im Bereich zwischen den beiden Dichtungsringen (88,90) durch radiale Wandbohrungen (104) des Hohlkolbens hindurchgeführt ist.

13. Filtergerät nach Anspruch 12, **dadurch gekennzeichnet**, daß die Wandbohrungen (104) innenseitig in einen zwischen Hohkolbendeckel (78) und Hohlkolbenwand gebildeten Ringkanal münden.

14. Filtergerät nach Anspruch 12 oder 13, **dadurch gekennzeichnet**, daß die Wandbohrungen (104) außenseitig zu einem Ringkanal erweitert und über vorzugsweise stirnseitig offene, gehäusefeste, über den Umfang verteilt angeordnete Radialkanäle (102) mit dem Absperrventil (98) verbunden sind.

## Claims

1. A backwashable filter assembly comprising a first chamber (28) for untreated water which is adapted to be subjected to untreated water by way of an inlet (26), a second chamber (32) for treated water which is separated from the first chamber by means of an essentially hollow-cylindrical filter element (16) and which leads to an outlet (30) for the treated water, a backwashing chamber (34) which is adapted to be connected to a sealable backwashing conduit (109), and a backwashing element (18) which is positioned within the filter element (16), which is axially displacable over the surface of the filter element (16) on the untreated water side, and which is adapted to be connected to the backwashing chamber (34) on the outlet side, wherein the backwashing element comprises an inlet opening (44) formed to be a slit-shaped circumferential opening radially oriented toward the inner surface of filter element, which inlet opening is disposed at at least one wiper element (42) which abuts the filter element (16) with the limiting edges of the inlet opening (44) and which axially glides thereon during displacement of the backwashing element (18), which wiper element further carries at its end which extends into the backwashing chamber (34) a seal member (62) which adapted to be pressed against a seal (60) in the region of the backwashing conduit, and which at its end opposed to the seal member (62) extends in a pressure tight manner from the chamber (34) for untreated water with a piston attachment (66) into a control chamber (76) which is adapted to be subjected to the main supply pressure, **characterized in that** the piston attachment (66) is formed to be a differential piston, the effective piston area of which is smaller toward the chamber (28) for untrated water than toward the control chamber (76), and in that the control chamber (76) permanently communicates with the chamber (28) for untreated water or with the chamber (32) for treated water by way of a choke element (96), and is adapted to be connected by way of a shut-off valve (98) to a relief conduit (100) which is at atmospheric pressure and which is connected to the backwashing conduit (109).

2. The filter assembly of claim 1, **characterized in that** the backwashing element (18) is spring biased in the sealing position of the seal member (62), preferably by means of a return spring (86) disposed within the control chamber (76).

3. The filter assembly of claim 1 or 2, **characterized in that** the choke element (96) is formed to be a jet which is preferably disposed is a branch conduit subjected to untreated water.

4. The filter assembly of claim 3, **characterized in that** a filter sieve (94) is disposed upstream of the choke element (96) in the branch conduit (92).

5. The filter assembly of one of claims 1 to 4, **characterized in that** the shut-off valve (98) is formed to be a seat valve, in particular a membrane valve, the valve body or membrane (100) of which is actuatable by means of a tappet (112) which is made from a magnetizable material and which is spring biased in the direction of closing and displaceable against the spring bias in the opening direction by means of a magnet.

6. The filter assembly of claim 5, **characterized in that** the shut-off valve (98) comprises a push button (118) which is fitted with a permanent magnet (120) and which is adapted to be displaced with its permanent magnet in the direction of the tappet (112) against the force of a return spring (122).

7. The filter assembly of claim 6, **characterized in that** the shut-off valve (98) comprises an elctromagnet (123) which is disposed in the vicinity of the tappet (112) and which is adapted to be subjected to an electric current by way of a central control unit.

8. The filter assembly of one of claims 1 to 7, **characterized in that** the piston attachment (66) of the backwashing element (18) is formed to be a hollow piston which is closed-off in a pressure-tight manner with respect to the control chamber (76), preferably by means of a cover (78), the hollow space of which piston communicates with the relief conduit (100) and is open toward the backwashing conduit by way of a drain conduit (108) which centrally extends through the backwashing element (18) and the seal member (62).

9. The filter assembly of claim 8, **characterized in that** the hollow piston cover (78) is press-fitted onto the piston attachment (66).

10. The filter assembly of claim 8 or 9, **characterized in that** the hollow piston cover (78) comprises a depression (84) on the side of the control chamber for accomodating therein one end of the return spring (86) for the backwashing element (18), which return spring is formed to be a helical compression spring.

11. The filter assembly of one of claims 1 to 10, **characterized in that** the piston attachment (66) comprises two axially spaced sealing rings (88, 90) having different diameters, which are preferably formed to be groove rings and which define the smaller and the larger effective piston area.

12. The filter assembly of claim 11, **characterized in that** the relief conduit leading from the shut-off valve (98) to the hollow space (80) of the piston is led through radial wall bores (104) in the hollow piston in the region between the two sealing rings (88, 90).

13. The filter assembly of claim 12, **characterized in that** the wall bores (104) lead on the internal side into a an annular conduit formed between the hollow piston cover (78) and the wall of the hollow piston.

14. The filter assembly of claim 12 or 13, **characterized in that** the wall bores (104) expand on the outer side to an annular conduit and are connected to the shut-off valve (98) by way of radial conduits (102) which are distributed over the circumference of the housing and are preferably open at their front face side.

## Revendications

1. Appareil de filtration à rétrolavage, avec une chambre d'eau brute (28), pouvant être alimentée par l'intermédiaire d'une admission d'eau brute (26) en eau à la pression du réseau, avec une chambre d'eau pure (32), séparée de la précédente par un élément filtrant (16) essentiellement en forme de cylindre creux et menant à une évacuation d'eau pure (30), avec une chambre de rétrolavage (34) pouvant être reliée à un canal de rétrolavage (109) pouvant être fermé, et avec un élément de rétrolavage (18), disposé à l'intérieur de l'élément filtrant (16), pouvant être déplacé axialement sur la surface côté eau brute de l'élément filtrant (16) et pouvant être relié du côté de sortie à la chambre de rétrolavage (34), l'élément de rétrolavage (18) présentant une ouverture d'entrée (44), qui est réalisée sous forme d'ouverture périphérique en forme de fente dirigée radialement vers la face intérieure de l'élément filtrant et qui est disposée sur au moins un élément racleur (42), lequel s'applique par les bords de délimitation de l'ouverture d'entrée (44) contre l'élément filtrant (16) et coulisse axialement sur l'élément de rétrolavage (18) lors du déplacement de ce dernier, l'élément de rétrolavage (18) portant en outre, à son extrémité s'enfonçant dans la chambre de rétrolavage (34), un obturateur (62) pouvant être pressé contre un siège d'étanchéité (60) dans la région du canal de rétrolavage, et l'élément de rétrolavage (18), à son extrémité opposée à l'obturateur (62), s'engageant depuis la chambre de rétrolavage (34) en étanchéité à la pression, par un appendice en forme de piston (66), dans une chambre de commande (76) pouvant être sollicitée par la pression du réseau, **caractérisé** en ce que l'appendice en forme de piston (66) est réalisé sous forme de piston différentiel, dont la surface active de piston est plus petite vers la chambre d'eau brute (28) que vers la chambre de commande (76), et en ce que la chambre de commande (76) communique en permanence, par l'intermédiaire d'un élément d'étranglement (96), avec la chambre d'eau brute (28) ou la chambre d'eau pure (32), et peut être reliée, par l'intermédiaire d'une soupape d'isolement (98), à un canal de décharge (100) relié au canal de rétrolavage (109) et exposé à la pression atmosphérique.

2. Appareil de filtration selon la revendication 1, **caractérisé** en ce que l'élément de rétrolavage (18) est de préférence sollicité par ressort dans la position de fermeture de l'obturateur (62) au moyen d'un ressort de rappel (86) disposé dans la chambre de commande (76).

3. Appareil de filtration selon la revendication 1 ou 2, **caractérisé** en ce que l'élément d'étranglement (96) est réalisé sous la forme d'une buse disposée de préférence dans une conduite dérivée alimentée en eau brute.

4. Appareil de filtration selon la revendication 3, **caractérisé** en ce qu'un tamis filtrant (94) est disposé avant l'élément d'étranglement (96), dans la direction d'écoulement, dans la conduite dérivée (92).

5. Appareil de filtration selon une des revendications 1 à 4, **caractérisé** en ce que la soupape d'isolement (98) est réalisée sous forme de soupape à siège, notamment de soupape à membrane, dont le corps de soupape ou la membrane (110) peut être actionné(e) au moyen d'un poussoir (112) en matériau magnétisable, sollicité par ressort dans la direction de fermeture et pouvant être déplacé dans la direction d'ouverture, à l'encontre de la charge de ressort, au moyen d'un aimant.

6. Appareil de filtration selon la revendication 5, **caractérisé** en ce que la soupape d'isolement (98) présente un bouton-poussoir (118), qui est équipé d'un aimant permanent (120) et qui, par son aimant permanent, peut être déplacé en direction du poussoir de soupape contre la force d'un ressort de rappel (122).

7. Appareil de filtration selon la revendication 6, **caractérisé** en ce que la soupape d'isolement (98) présente un électroaimant (123), disposé au voisinage du poussoir (112) et pouvant être alimenté en courant électrique par un dispositif de commande central.

8. Appareil de filtration selon une des revendications 1 à 7, **caractérisé** en ce que l'appendice en forme de piston (66) de l'élément de rétrolavage (18) est réalisé sous forme de piston creux, qui est fermé en étanchéité à la pression en direction de la chambre de commande (76), de préférence par un couvercle (78), et dont la cavité communique avec le tube de décharge (100) et est ouverte vers le canal de rétrolavage en passant par une conduite d'évacuation (108) traversant centralement l'élément de rétrolavage (18) et l'obturateur (62).

9. Appareil de filtration selon la revendication 8, **caractérisé** en ce que le couvercle (78) du piston creux est posé en ajustement serré sur l'appendice en forme de piston (66).

10. Appareil de filtration selon la revendication 8 ou 9, **caractérisé** en ce que le couvercle (78) du piston creux présente, côté chambre de commande, un renfoncement (84) destiné à recevoir une des extrémités du ressort de rappel (86), réalisé sous forme de ressort de pression à boudin, pour l'élément de rétrolavage (18).

11. Appareil de filtration selon une des revendications 1 à 10, **caractérisé** en ce que l'appendice en forme de piston (66) présente deux joints d'étanchéité annulaires (88, 90) de diamètres différents, disposés à distance axiale l'un de l'autre et réalisés de préférence sous forme de joints en U à lèvres, qui définissent la surface active de piston plus petite et la surface active de piston plus grande.

12. Appareil de filtration selon la revendication 11, **caractérisé** en ce que le canal de décharge menant de la soupape d'isolement (98) à la cavité de piston (80) passe, dans la région située entre les deux joints d'étanchéité annulaires (88, 90), par des perçages de paroi radiaux (104) du piston creux.

13. Appareil de filtration selon la revendication 12, **caractérisé** en ce que, du côté intérieur, les perçages de paroi (104) débouchent dans un canal annulaire formé entre le couvercle (78) du piston creux et la paroi du piston creux.

14. Appareil de filtration selon la revendication 12 ou 13, **caractérisé** en ce que, du côté extérieur, les perçages de paroi (104) sont élargis en un canal annulaire et sont reliés à la soupape d'isolement (98) par l'intermédiaire de canaux radiaux (102) solidaires du boîtier, disposés en étant répartis sur la périphérie et de préférence ouverts sur le côté frontal.
